**Europäisches Patentamt**

**European Patent Office**

**Office européen des brevets**

(19)

(11) **EP 1 434 434 A1**

(12) **EUROPÄISCHE PATENTANMELDUNG**

(43) Veröffentlichungstag:
**30.06.2004 Patentblatt 2004/27**

(51) Int Cl.⁷: **H04N 5/74**

(21) Anmeldenummer: **03024758.9**

(22) Anmeldetag: **29.10.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **31.10.2002 DE 10251217
08.03.2003 EP 03005195**

(72) Erfinder: **Klose, Stefan
15732 Waltersdorf (DE)**

(74) Vertreter: **Hilleringmann, Jochen, Dipl.-Ing. et al
Patentanwälte
von Kreisler-Selting-Werner,
Bahnhofsvorplatz 1 (Deichmannhaus)
50667 Köln (DE)**

(71) Anmelder: **Fraunhofer-Gesellschaft zur
Förderung der angewandten Forschung e.V.
80636 München (DE)**

(54) **Autokalibrierung von Multiprojektorsystemen**

(57)    Das Verfahren zur automatischen Kalibrierung eines Multiprojektorsystems mit mindestens zwei Projektoren, einer Digital-Kamera und einer Ansteuerungseinheit zur Ansteuerung der Projektoren und der Kamera wird gemäß folgender Schritte durchgeführt:

- Erzeugung, Aufnahme und Bildfilterung von Streifenmustern,
- Finden der größtmöglichen Projektionsfläche und
- Berechnung von Warp-Feldern und Imagewarping.

**Fig.7**

EP 1 434 434 A1

**Beschreibung**

**Einleitung**

Die Erfindung betrifft ein Verfahren zur automatischen Kalibrierung eines Multiprojektorsystems, das erlaubt, eine beliebige Anzahl von Bildern, die von verschiedenen Projektoren erzeugt werden, pixelgenau übereinander zu legen, um die Gesamtleuchtstärke zu erhöhen bzw. eine Stereodarstellung zu ermöglichen, oder aber ein Bild aus mehreren sich pixelgenau überlappenden Projektionsbildern auf einer (Groß-)Leinwand darzustellen.

**Problembeschreibung**

Um die Gesamthelligkeit eines Bildes zu erhöhen bzw. um ein Passiv-Stereo-Bild zu erzeugen, ist es notwendig, dass mehrere Projektoren denselben Bereich der Projektionsfläche beleuchten. Bei dieser Bilddarstellung besteht das Problem darin, dass die Einzelbilder der Projektionseinheiten in der Regel nicht übereinander liegen. Diese Kalibrierung wird momentan manuell getätigt und ist mit hohem Aufwand verbunden und zu ungenau.

Darüber hinaus besteht schon seit langem der Wunsch, neben der Geometrieentzerrung und Erhöhung der Leuchtstärke eine Möglichkeit zu schaffen, die Pixelauflösung einer Projektion zu erhöhen. Da Projektoren mit hohen Auflösungen (> 1024 x 768) sehr teuer sind, war die nahe liegende Lösung, diese Erhöhung über mehrere Projektoren zu erreichen. Problem dabei war, dass die Projektoren in der Regel nicht nahtlos aneinander positioniert werden können. Die Projektoren sind zumeist schief zueinander ausgerichtet und haben einen helleren Überblendbereich.

Diese Effekte müssen mittels einer Systemkalibrierung ausgeglichen werden. Der aktuelle Stand der Technik wird von unflexibler, teurer manueller Kalibrierung dominiert. Es gibt aber bereits erste Ansätze für eine automatische Kalibrierung, die aber wenig robust sind.

Ziel ist es, eine pixelgenaue Auto-Kalibrierung zu implementieren, die die umständliche manuelle Feinjustage überflüssig macht. Durch diese Kalibrierung werden sowohl die Projektionsflächen zueinander ausgerichtet, Verzerrungen durch die Geometrie der Projektionsfläche kompensiert und die einzelnen Projektoren derartig ineinander geblendet, dass der Überblendbereich nicht mehr wahrnehmbar ist und eine Projektion bestehend aus n x m Projektoren für den Benutzer als ein Ein-Projektor-Display erscheint.

US-B-6,222,593 beschreibt ein Multiprojektor-System, bei dem das Projektionsbild aus mehreren einander überlappenden Teilbildern besteht, von denen jedes von einem anderen Projektor projiziert wird, wobei das Gesamtprojektionsbild von einer Kamera erfasst wird. Die Ansteuerung der Projektoren erfolgt in Abhängigkeit von dem jeweiligen Abstand und der jeweiligen Ausrichtung (Drehung um drei Winkel im Raum) der Projektoren relativ zur Projektionsfläche. Aufgrund dieser lediglich globalen Bildtransformation kann das bekannte System nicht bei beliebig geformten Projektionsflächen eingesetzt werden.

Weitere Multiprojektionssysteme sind z. B. auch in WO-A-00/18139 und WO-A-00/07376 beschrieben. Auch hier erfolgt eine Kalibrierung des Systems, wobei jedoch stets davon ausgegangen wird, dass die Projektionsbilder verzerrungsfrei, d. h. die Projektionsfläche eben und insbesondere senkrecht zu den optischen Achsen der Projektoren und einer Kamera sind.

Aufgabe der Erfindung ist es, eine pixelgenaue Auto-Kalibrierung zu implementieren, die die umständliche manuelle Feinjustage überflüssig macht. Diese Kalibrierung kompensiert zusätzlich noch durch die Geometrie der Projektionsfläche bzw. durch den Projektor (Keystone) hervorgerufene Bildverzerrungen (bezogen auf die Kamera).

Zur Lösung der vorstehend genannten Aufgabe wird mit der Erfindung ein Verfahren zur automatischen Kalibration eines Multiprojektorsystems vorgeschlagen, das versehen ist mit mindestens zwei Projektoren zur Projektion von Bildern auf eine Projektionsfläche, einer Digital-Kamera zur Erfassung der Projektionsfläche und einer Ansteuerungseinheit zur Ansteuerung der Projektoren und der Kamera.

Die Autokalibrierung wird gemäß den folgenden Schritten durchgeführt:

- Projizieren von Einzelstreifenmustern aus sich kreuzenden gruppenweise parallelen Linien auf die Projektionsfläche durch jeden der Projektoren, wobei die Lage der Linienschnittpunkte des Einzelstreifenmusters im zu projizierenden Bild bekannt ist,
- Aufnehmen der projizierten Einzelstreifenmuster mittels der Kamera,
- Filterung der aufgenommenen Einzelstreifenmuster zur Kompensation von Hintergrundrauschen, Umgebungslicht und/oder durch die Kamera hervorgerufene optische Verzerrungen der Einzelstreifenmuster und zur Ermittlung der Linienschnittpunkte der aufgenommenen Einzelstreifenmuster,
- Ermitteln der größtmöglichen Projektionsfläche anhand der aufgenommenen Einzelstreifenmuster,
- Vergleichen der Lage der Linienschnittpunkte innerhalb der aufgenommenen Einzelstreifenmuster mit der bekannten Lage der Linienschnittpunkte der von den Projektoren zu projizierenden Einzelstreifenmuster zur Ermittlung von Korrekturdaten zur Korrektur von infolge von Unebenheiten der Projektionsfläche auftretenden Verzerrungen,

- Berechnen von Warp-Feldern und Imagewarping entsprechend der Korrekturdaten.

Im Falle der Anwendung der Erfindung auf ein Projektionssystem, bei dem die Projektionsbilder zweier (oder mehrerer) Projektoren möglichst großflächig übereinander gelegt werden (z.B. zur Erhöhung der Gesamtleuchtstärke des projizierten Bildes oder für die Stereodarstellung) wird die größtmögliche Projektionsfläche als größtmögliche gemeinsame Rechteckfläche innerhalb des Überlappungsbereichs der Projektionsflächen sämtlicher Projektoren gewählt. Hierbei projizieren die Projektoren die gleiche Bildinformation auf die Projektionsfläche, die die übereinandergelagerten Projektionsbilder zeigt. Dadurch ist die Leuchtstärke auf der Projektionsfläche erhöht.

Handelt es sich dagegen um ein Projektionssystem, bei dem die einzelnen Bereiche eines Projektionsgesamtbildes durch Teilbilder projizierende Projektoren erzeugt werden, so überlappen sich die einzelnen Projektionsteilbilder. Die maximale Projektionsfläche ist in diesem Fall diejenige Rechteckfläche, die sämtliche Teilprojektionsflächen umfasst.

Bei der Erfindung wird Standard-PC-Technologie, d.h. keine teurere Spezialhardware benötigt. Die verwendeten Projektoren (auch als Beamer bezeichnet) sind computergesteuert und im Handel erhältlich.

Die Filterung der von der Kamera bzw. allgemeinen optischen Aufnahmevorrichtung aufgenommener Streifenmuster dient der Bildbearbeitung und kompensiert Verzerrungen oder andere optische Fehler/Unzulänglichkeiten der optischen Aufnahmevorrichtung. Wenn die Linien der Streifenmuster bei Projektion z. B. ein Pixel breit sind, so ist leider nicht gesagt, dass auch die von der Aufnahmevorrichtung erfassten Linien lediglich ein Pixel breit sind; vielmehr sind diese Linien mehrere Pixel breit. Um jedoch die Lage der Schnittpunkte der projizierten Linien mit denen der Schnittpunkte der aufgenommenen projizierten Linien vergleichen zu können, müssen aus den "Schnittfeldern" die Schnittpunkte (x-/y-Koordinate eines Pixels) durch Mitteilung ermittelt werden. Daneben ist auch noch zu berücksichtigen, dass die Ränder der Linien in der Aufnahme gezackt sind, wenn die projizierten Linien, was der Normalfall sein wird, nicht exakt mit der Zeilen- und Spaltenausrichtung der Pixel der Kamera übereinstimmen.

Im folgenden sollen die Teilschritte der Autokalibrierung anhand der Abbildungen erläutert werden.

Im einzelnen zeigen:

Abb. 1    Versuchsaufbau mit zwei Projektoren gemäß einem ersten Ausführungsbeispiel der Erfindung,

Abb. 2    Hintergrundbild (Projektion zweier schwarzer Flächen),

Abb. 3    horizontale Streifenprojektion des linken Projektors von Abb. 1,

Abb. 4    horizontale Streifenprojektion des rechten Projektors von Abb. 1,

Abb. 5    vertikale Streifenprojektion des linken Projektors von Abb. 1,

Abb. 6    vertikale Streifenprojektion des rechten Projektors von Abb. 1,

Abb. 7    erkanntes Gitternetz und größte, gemeinsame Projektionsfläche des Versuchsaufbaus gemäß Abb. 1,

Abb. 8    gewarptes Bild des linken Projektors von Abb. 1,

Abb. 9    gewarptes Bild des rechten Projektors von Abb. 2,

Abb. 10    entzerrtes Bild des linken Projektors (rechter Projektor ist abgedeckt) von Abb. 1,

Abb. 11    entzerrtes Bild beider Projektoren des Versuchsaufbaus von Abb. 1 übereinander,

Abb. 12    Vergleich der Einzelleuchtstärke der beiden Projektionsbilder des Versuchsaufbaus gemäß Abb. 1,

Abb. 13    ein verzerrtes Bild eines 2 x 2 Projektor-Cluster gemäß einem zweiten Ausführungsbeispiel der Erfindung,

Abb. 14    die größte Projektionsfläche im 2 x 2 Projektor-Cluster gemäß Abb. 13,

Abb. 15    das entzerrte Gesamtbild (ohne Blending) des 2 x 2 Projektor-Cluster gemäß Abb. 13,

Abb. 16    das entzerrte Gesamtbild (mit Blending) des 2 x 2 Projektor-Cluster gemäß Abb. 13 und

Abb. 17    Teilergebnisse des Algorithmus exemplarisch für eine Teilprojektion aufgezeigt.

Ausführungsbeispiel 1

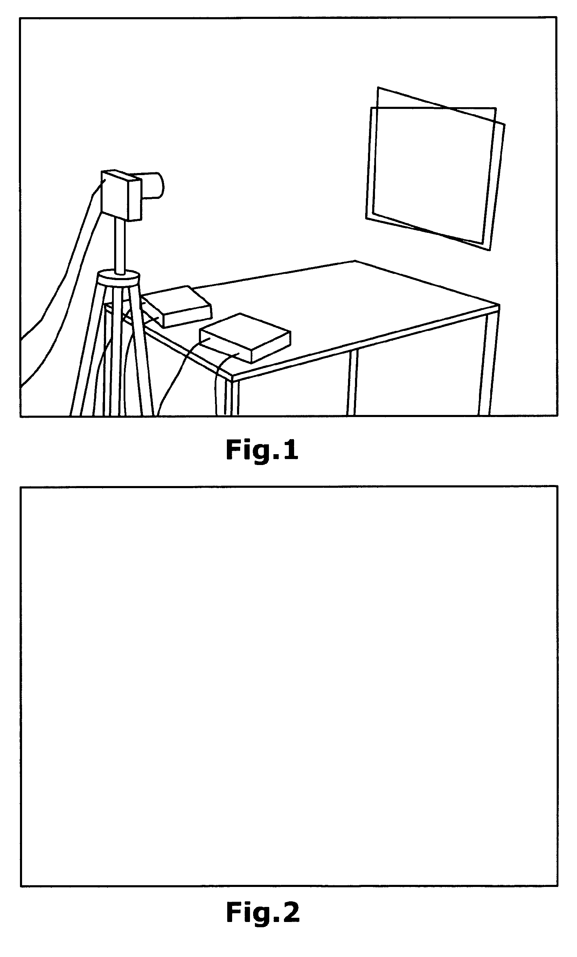

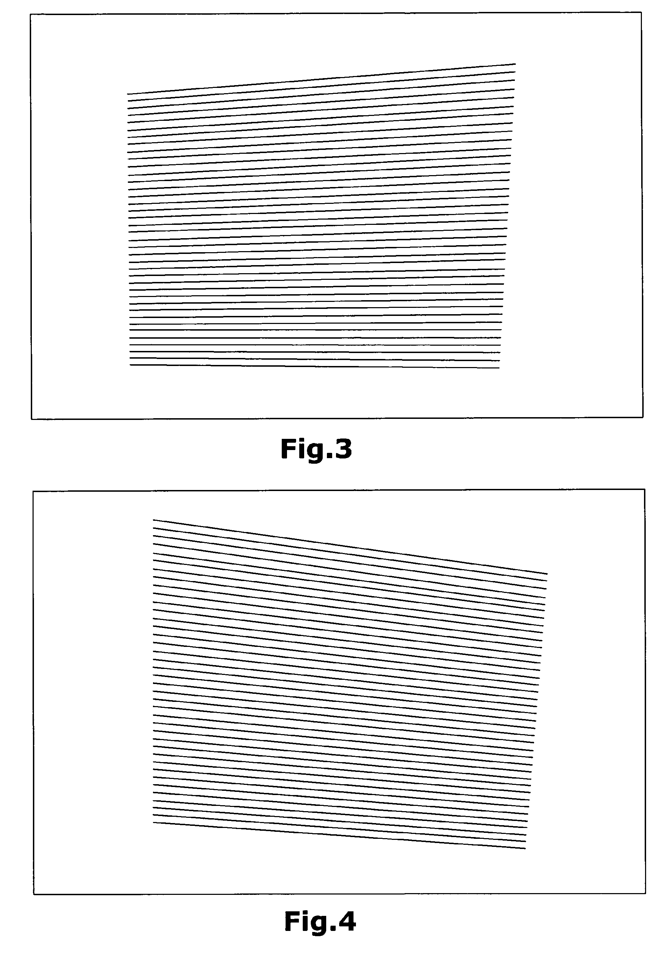

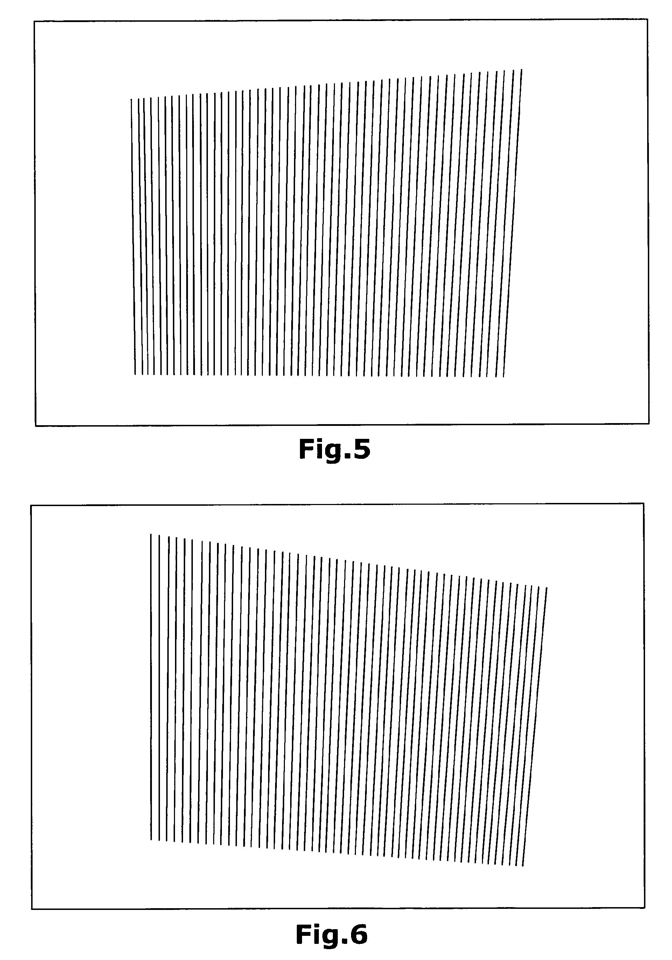

Anhand der Abb. 1 bis 12 wird nachfolgend ein erstes Ausführungsbeispiel der Erfindung erläutert, bei dem die Projektionsbilder zweier Projektoren zur Erzeugung von Stereobildern oder von Projektionsbildern erhöhter Gesamtleuchtstärke nahezu vollständig übereinandergelegt werden.

**Erzeugung, Aufnahme und Bildfilterung der Streifenmuster**

Um eine erfolgreiche Geometrieentzerrung mittels Imagewarping durchführen zu können, muss zuerst die zu Grunde liegende Geometrie der Projektionsfläche erfasst werden. Dies geschieht durch die Aufnahme von projizierten vertikalen und horizontalen Streifenmustern. Diese Streifen haben einen konstanten Abstand, der je nach Komplexität der zu entzerrenden Geometrie zu wählen ist. Bei dem hier beschriebenen Ausführungsbeispiel wurde ein Streifenabstand von zwanzig Pixeln gewählt, da die Wand viele Unregelmäßigkeiten aufwies. Andere Streifenabstände und Anordnungen sind möglich. Anhand der Linienzüge (gekrümmt, gerade, schräg) und der Linienabstände kann auf die Geometrie der Projektionsfläche geschlossen werden. Die projizierten Streifen werden für alle Projektoren mit einer Digitalkamera aufgenommen (in unserem Fall zwei Projektoren => zwei vertikale und zwei horizontale Streifenbilder). Zusätzlich wird noch ein Bild aufgenommen, bei dem beide Projektoren auf Schwarz geschaltet sind, um den teilweise störenden Hintergrund bzw. niedriges Rauschen aus dem Kamerabild entfernen zu können. Dieses Hintergrundbild wird vor der weiteren Bildfilterung von allen aufgenommen Bildern subtrahiert. Die aufgenommen Bilder sind in den Abb. 2 bis 6 zu sehen.

Auf Grund der Verwendung einer Linsenkamera zeigen die aufgenommenen Bilder typische radiale Verzerrungen auf, die vor der Weiterverarbeitung entfernt werden müssen. Bei verzerrungsfreier Aufnahme kann dieser Schritt entfallen.

Die eigentliche Filterung wurde mit Standardbildverarbeitungsfilteroperationen durchgeführt. Nach der Bildsubtraktion von zu filterndem Bild und Hintergrundbild wird das Ergebnisbild in Graustufen umgewandelt, so dass jeder der drei Farbkanäle denselben Farbwert hat. Anschließend wird dieses Bild in Abhängigkeit eines Schwellwertes in ein Schwarz/Weiß-Bild umgewandelt, wobei die Streifen Weiß sind und der Hintergrund Schwarz. Um Löcher in den Streifen zu entfernen wird eine Dilation und Erosion durchgeführt. Anschließend müssen die Linien noch derart gefiltert werden, dass sie nur noch einen Pixel breit sind. Dies geschieht mit Hilfe eines vertikalen bzw. horizontalen Versatzfilters. Dieser Versatzfilter wird in zwei Richtungen ausgeführt (links und rechts bzw. oben und unten). Der Mittelwert der Ergebnisse dieser beiden Filteroperationen liefert den Mittelpunkt des Streifens. Die gefilterten Streifen werden nun durch ihre Mittelpunkte repräsentiert.

Sämtliche Filteroperationen wurden mittels an sich bekannter Pixelshader hardwareunterstützt umgesetzt.

**Berechnung der größtmöglichen Projektionsfläche**

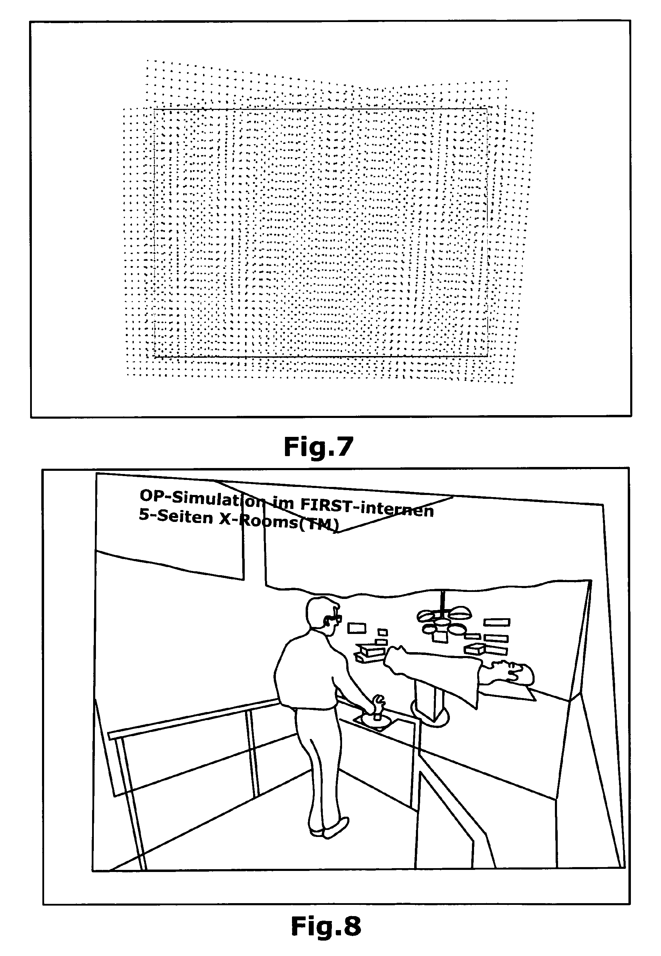

Um eine deckungsgleiche Wahrnehmung zu gewährleisten, muss die größte gemeinsame Projektionsfläche aller Projektoren im Originalbildverhältnis (in diesem Ausführungsbeispiel 4:3) bestimmt werden. Dazu wird zuerst aus den gefilterten Streifenmustern ein Gitternetz erzeugt. Mit Hilfe eines Optimierungsalgorithmus wird innerhalb dieses Netzes, welches in unserem Fall aus zwei Teilgitternetzen besteht, die größte gemeinsame Projektionsfläche "gesucht". Das Gitter des linken und rechten Projektors sowie die Zielprojektionsfläche sind in Abb. 7 dargestellt. Aus diesen Daten können im Anschluss die Parameter für das Warping bestimmt werden.

**Berechnung der Warp-Felder und Imagewarping**

Mithilfe des zuvor berechneten Gitters kann das Bild in Warpingpatches zerlegt werden. Diese Patches bestehen aus einem Dest-Patch (der Bildbereich, in den ein Bildteil gewarpt werden soll) und einem Src-Patch (der Bildbereich, der in den Dest-Patch gewarpt wird).

Die Eckpunkt-Berechnung der Dest-Patches ist trivial. Aufgrund des vorgegebenen Abstands der horizontalen und vertikalen Linien ist somit auch die Position sämtlicher Gitterpunkte im Ziel bekannt.

Die Src-Patches werden in Abhängigkeit des Projektionsrechteckes (im Foto) und der Position der Dest-Patches (im Foto) linear berechnet. Es wird die Berechnung für die linke untere Ecke eines Src-Patches in Abhängigkeit der linken unteren Ecke eines Dest-Patches aufgezeigt:

$$patch.x1 = (pLB.X - projectionRect.left) \,/\, (projectionRect.right -$$

*projectionRect.left);*

*patch.y1 = (pLB.Y - projectionRect.bottom) / (projectionRect.top -*

*projectionRect.bottom)*.

Das Src-Patch wird mittels eines Warping-Verfahrens inklusive integrierter perspektivischer Korrektur in das Dest-Patch transformiert.

Wird der Abstand der horizontalen und vertikalen Linien relativ klein gewählt, ist auch der Ausgleich von Krümmungen realisierbar. Mit den bei den Versuchen gewählten Linienabständen von zwanzig Pixeln war es bereits möglich, Krümmungen der Wand auszugleichen, so dass sich das projizierte Bild auf der gekrümmten Projektionsfläche für den Betrachter (von der Kamera aus) wie auf eine ebene Fläche projiziert darstellt.

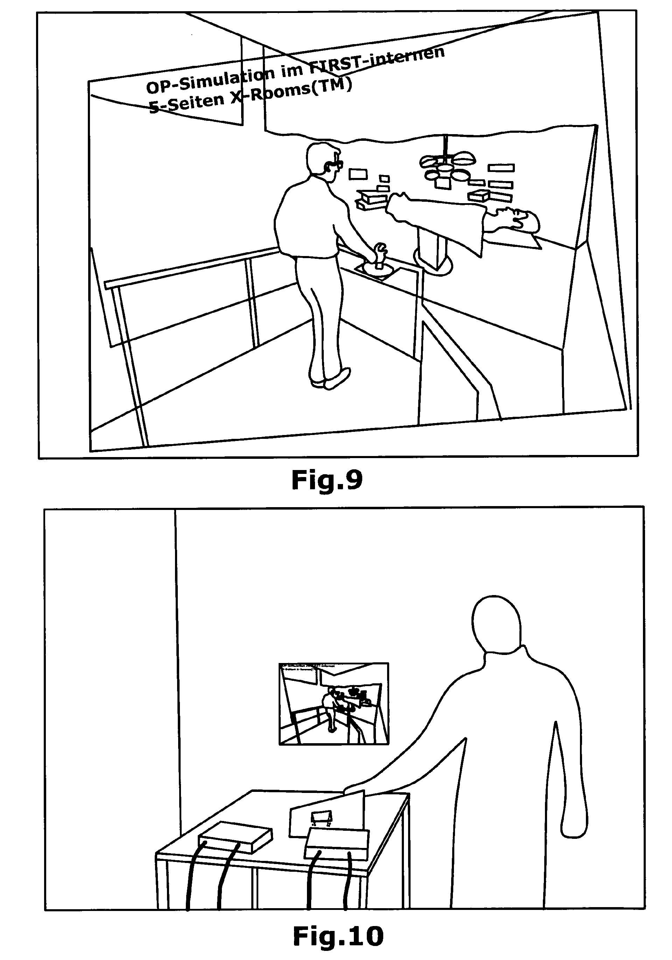

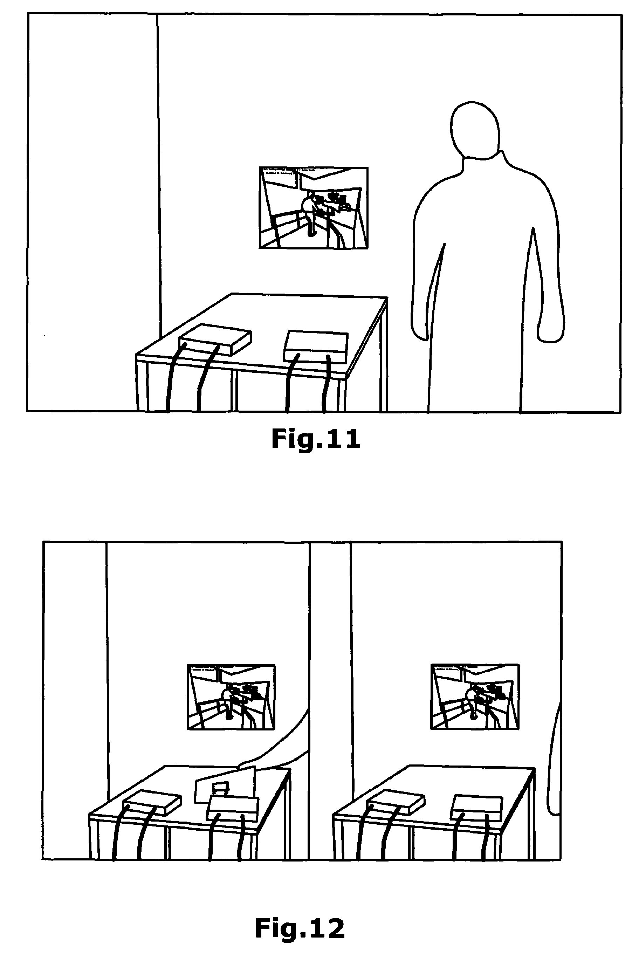

Bei einer Zweiprojektorkalibrierung müssen zwei Warp-Arrays berechnet werden, bei mehr als zwei Projektoren entsprechend mehr. Die Warp-Arrays werden immer in Abhängigkeit der korrespondierenden Gitterpunkte mit der Beschränkung durch die gemeinsame größte Projektionsfläche bestimmt. Die für eine Zweikanalprojektion berechneten gewarpten Bilder sind in Abb. 8 und 9 zu sehen. Das Ergebnis an der Projektionsfläche ist für einen Projektor in Abb. 10 und für zwei Projektoren in Abb. 11 zu sehen. Der Vergleich der Leuchtstärke ist in Abb. 12 dargestellt.

Um eine effektive Verarbeitung zu gewährleisten, wird die Autokalibrierung nur einmal (pro Sitzung) durchgeführt. Aus diesem Grund werden die für die Geometrieentzerrung und Multiprojektorkalibrierung berechneten Daten in Warp-Feldern gespeichert, welche z.B. vom X-Rooms™-System (K. Isakovic, T. Dudziak, K. Köchy. *X-Rooms. A PC-based immersive visualization environment,* Web 3D Conference, Tempe, Arizona, 2002) verwendet werden können. Die Entzerrung mittels der Warp-Felder wurde wiederum hardwareunterstützt umgesetzt, so dass eine Entzerrung in Echtzeit möglich ist.

**Anwendungsgebiete**

Für eine Multiprojektorkalibrierung gibt es viele Anwendungsgebiete. Sie kann beispielsweise zur kostengünstigen Leuchtstärkeerhöhung bzw. zur Stereokalibrierung verwendet werden. Des weiteren kann ohne großen Aufwand eine Geometrie- und Projektorbedingte Entzerrung durchgeführt werden. Praktische Versuche haben gezeigt, dass die Autokalibrierung eines Zweiprojektorsystems mittels des erfindungsgemäßen Verfahrens lediglich etwa 35 Sekunden inklusive der Bildaufnahme (ca. 20 Sekunden) dauert. Damit stellt die Erfindung eine signifikante Steigerung gegenüber der manuellen Kalibrierung dar.

Ausführungsbeispiel 2

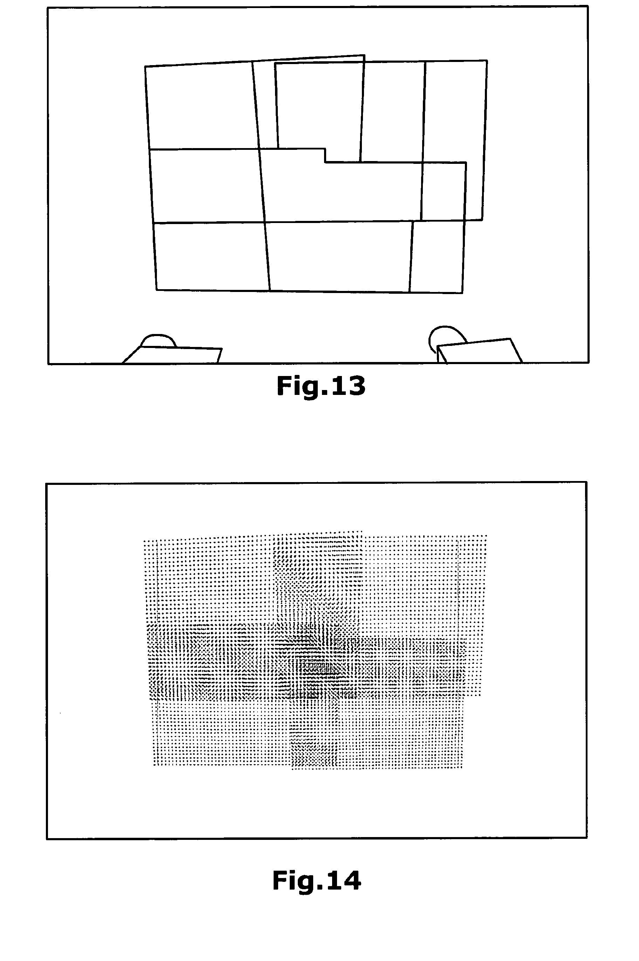

Im folgenden Text wird anhand er Abb. 13 bis 17 eine Erweiterung des zuvor beschriebenen Verfahrens zur Autokalibrierung von Multiprojektorsystemen vorgestellt. Während zuvor auf die Möglichkeit eine beliebige Anzahl von Bildern zur Leuchtstärkeerhöhung pixelgenau übereinander zu legen eingegangen wurde, wird in dem hiermit vorliegenden Text die Fähigkeit des Systems zur automatischen Kalibrierung von Projektor-Clustern, die als n x m Projektor-Matrix vorliegen, beschrieben.

Schon seit langem besteht der Wunsch neben der Geometrieentzerrung und Erhöhung der Leuchtstärke eine Möglichkeit zu schaffen, die Pixelauflösung einer Projektion zu erhöhen. Da Projektoren mit hohen Auflösungen (> 1024 x 768) sehr teuer sind, war die nahe liegende Lösung, diese Erhöhung über mehrere Projektoren zu erreichen. Problem dabei war, dass die Projektoren in der Regel nicht nahtlos aneinander positioniert werden können. Die Projektoren sind zumeist schief zueinander ausgerichtet und haben einen helleren Überblendbereich (siehe Abb. 13).

Diese Effekte müssen mittels einer Systemkalibrierung ausgeglichen werden. Der aktuelle Stand der Technik wird von unflexibler, teurer manueller Kalibrierung dominiert. Es gibt aber bereits erste Ansätze für eine automatische Kalibrierung, die aber wenig robust sind.

Ziel ist es, eine pixelgenaue Auto-Kalibrierung zu implementieren, die die umständliche manuelle Feinjustage überflüssig macht. Durch diese Kalibrierung werden sowohl die Projektionsflächen zueinander ausgerichtet, Verzerrungen durch die Geometrie der Projektionsfläche kompensiert und die einzelnen Projektoren derartig ineinander geblendet, dass der Überblendbereich nicht mehr wahrnehmbar ist und eine Projektion bestehend aus n x m Projektoren für den Benutzer als ein Ein-Projektor-Display erscheint.

### Erzeugung, Aufnahme und Bildfilterung der Streifenmuster

Dieser Teil des Verfahrens ist bereits oben beschrieben. Deshalb soll hier nicht weiter darauf eingegangen werden.

### Berechnung der größtmöglichen Projektionsfläche

Um eine deckungsgleiche Wahrnehmung zu gewährleisten, muss die größte gemeinsame Projektionsfläche aller Projektoren im Originalbildverhältnis bestimmt werden. Dieses Bildverhältnis wird aus der Anzahl der Projektoren und deren Anordnung bestimmt. Ein Cluster mit 3 Projektoren in horizontaler Richtung hat beispielsweise ein Bildverhältnis von 12:3, das hier näher vorgestellte 2 x 2 System ein Verhältnis von 4:3.

Aus den zuvor gefilterten Streifenmustern wird wiederum ein Gitternetz erzeugt. Die automatisch per Optimierungsalgorithmus gefundene größte, überlappende Projektionsfläche sowie das zugrunde liegende Gitternetz werden in Abb. 14 dargestellt.

### Berechnung der Warp-Felder und Imagewarping

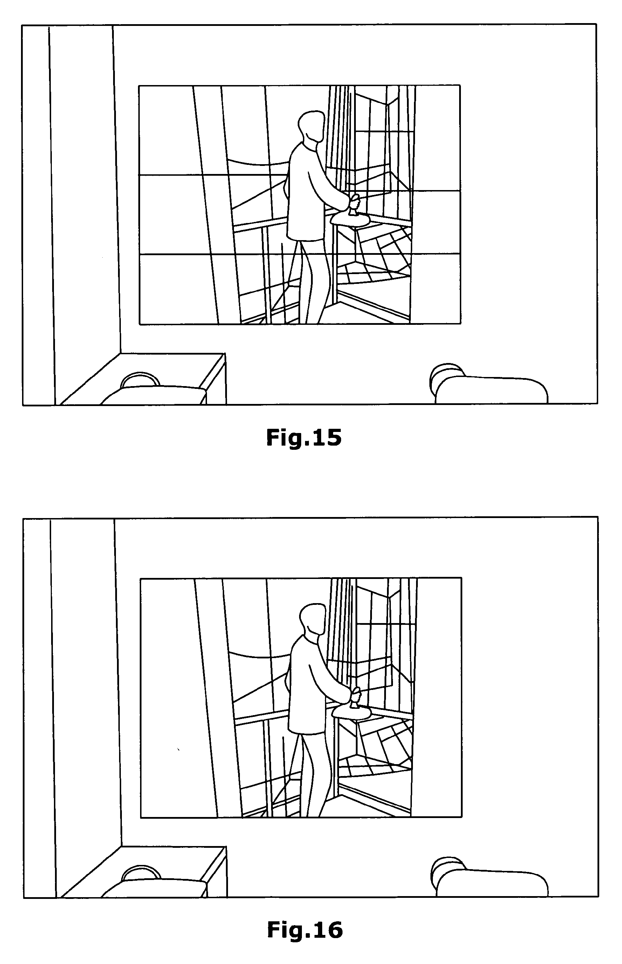

Die für das Warping der Teilbilder benötigten Matrizen werden wiederum nach dem oben beschriebenen Verfahren berechnet. Das entzerrte Gesamtbild (noch ohne Blending der überlappenden Bereiche) ist in Abb. 15 zu sehen.

### Blending der überlappenden Projektoren

Das durch das Imagewarping erzeugte Gesamtbild erscheint schon geometrisch homogen, weist aber an den Überlappungsbereichen eine größere Helligkeit auf. Dadurch ist es noch sehr leicht als zusammengesetztes Bild zu identifizieren. Ziel des Blendings ist es, diesen Überlappungsbereich so zu verändern, dass das Bild auch farblich homogen erscheint.

Während der Vorverarbeitung wird für jeden Projektor ein Blendbild in der Farbe Weiß erzeugt. Dieses Bild besitzt die Gesamtauflösung (bei 2 x 2 Projektoren also 2048 x 1536 Pixel) und wird nach der Berechnung der Blendwerte in ein Bild mit Projektorauflösung (1024 x 768) gewarpt und anschließend als Maskierungstextur verwendet (Multiplikation des bereits gewarpten Bildes in aktueller Grafikhardware per Multi-Texturing).

Im ersten Schritt zur Berechnung der Blendwerte werden die Gitterdaten der einzelnen Projektoren nach Position sortiert in einer n x m Matrix angeordnet. Im nächsten Schritt werden n Projektoren (in unserem Fall 2) horizontal miteinander geblendet. Dazu wird über das Projektionsrechteck sowie sämtliche Projektor-Gitterdaten (pro horizontalem Streifen) eine untere und obere Grenze bestimmt. Diese Grenzen liegen innerhalb der Projektionsfläche und innerhalb der n zu blendenden Projektionsflächen und sind des weiteren parallel zur Projektionsfläche. Diese Grenze vereinfacht das Blending zu einem einfachem Scanline-Verfahren.

Das horizontale Scanline-Blending erfolgt immer zwischen 2 überlappenden Bildern. Der rechte Rand wird durch den rechten Rand des linken Teilbildes repräsentiert, der linke Rand durch den linken Rand des rechten Teilbildes. Pro Zeile wird ein linearer Farbwertabfall von Start- zum Endpunkt durchgeführt. Als Grundlage für diesen Farbwertabfall dienen die bereits im Blendbild stehenden Farbwerte - so dass auch ein Mehrfachblending möglich ist - und ein pro Pixel der Scanline bestimmter Multiplikationsfaktor (über die gesamte Scanline von 1.0 -> 0.0). Die somit bestimmten linearen Blendwerte werden anschließend noch mit einer Gammakorrektur versehen ($linBlend^{1.0/gamma}$). Dieser Gammawert ist Projektorabhängig und kann pro Farbkanal (RGB) angeben werden. Der endgültig berechnete Blendwert wird sowohl im linken als auch im rechten Blendbild - abhängig vom Start- und Endpunkt der Scanline - gespeichert. Aufgrund der verschiedenen Start- und Endwerte (der Startpunkt im linken Teilbild entspricht dem Endwert im rechten Teilbild) entsteht ein so genannter Crossfade mit integrierter Gammakorrektur.

Anschließend werden alle Werte des Blendbildes unterhalb der unteren bzw. oberhalb der oberen Grenze geschwärzt.

Nach dem horizontalen Blending aller Streifen (in unserem Fall 2) muss noch ein vertikales Blending ausgeführt werden. Dieses erfolgt auch per Scanline-Verfahren, Startwert und Endwert pro vertikaler Scanline sind hier aber durch die obere Grenze eines bereits horizontal; geblendeten Streifens und der unteren Grenze des darüber liegenden bereits horizontal geblendeten Streifens.

Die nun vorliegenden Blendbilder in Gesamtprojektionsgröße werden mittels Imagewarping und den bereits vorliegenden Warp-Arrays in n x m Blendbilder in Projektorauflösung transformiert. Diese Blendbilder können nun in Echtzeit mittels Multi-Texturing zum Blending von Multiprojektorsystemen genutzt werden.

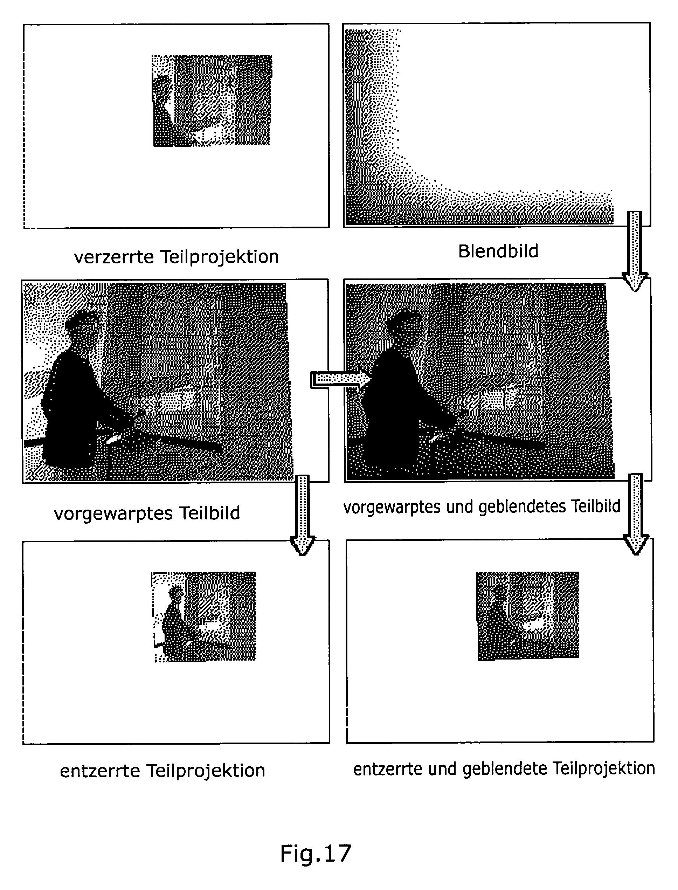

Das Ergebnis des Blendings eines 2 x 2 Projektor-Clusters ist in Abb. 16 zu sehen. In Abb. 17 wird eine Übersicht aller Arbeitsschritte exemplarisch an einem Teilbild aufgezeigt:

- verzerrtes Teilbild auf der Projektionsfläche (obere Zeile, linkes Bild),
- vorgewarptes Teilbild (mittlere Zeile, linkes Bild),
- dazugehöriges Blendbild (obere Zeile, rechtes Bild),
- vorgewarptes Teilbild mit dem Blendbild multipliziert (mittlere Zeile, linkes Bild),
- gewarptes, ungeblendetes Teilbild auf der Projektionsfläche (untere Zeile, linkes Bild),
- gewarptes, geblendetes Teilbild auf der Projektionsfläche (untere Zeile, rechtes Bild).

**Anwendungsgebiete**

Die hier vorgestellte automatische Multiprojektorkalibrierung kann überall dort angewendet werden, wo kostengünstig und ohne großen Zeitaufwand großformatige Projektionen hoher Qualität erzeugt werden sollen (Messen, Showrooms, HD- TV, Digital Cinema). Mit der hier vorgestellten Kalibrierung wird sowohl Geometrieentzerrung als auch Bild-Stitching und Bild-Blending vorgenommen. Die Autokalibrierung eines 2 x 2 Projektor-Clusters dauert mit dem hier vorgestellten Verfahren auf Standard-PC-Komponenten ca. 1 Minute inklusive der Bildaufnahme (ca. 30 Sekunden). Sie stellt somit eine signifikante Steigerung gegenüber der manuellen Kalibrierung dar.

**Patentansprüche**

1.  Verfahren zur automatischen Kalibrierung eines Multiprojektorsystems mit mindestens zwei Projektoren zur Projektion von Bildern auf eine Projektionsfläche, einer Digital-Kamera zur Erfassung der Projektionsfläche und einer Ansteuerungseinheit zur Ansteuerung der Projektoren und der Kamera, wobei eine Autokalibrierung gemäß folgender Schritte durchgeführt wird:

    - Projizieren von Einzelstreifenmustern aus sich kreuzenden gruppenweise parallelen Linien auf die Projektionsfläche durch jeden der Projektoren, wobei die Lage der Linienschnittpunkte des Einzelstreifenmusters im zu projizierenden Bild bekannt ist,
    - Aufnehmen der projizierten Einzelstreifenmuster mittels der Kamera,
    - Filterung der aufgenommenen Einzelstreifenmuster zur Kompensation von Hintergrundrauschen, Umgebungslicht und/oder durch die Kamera hervorgerufene optische Verzerrungen der Einzelstreifenmuster und zur Ermittlung der Linienschnittpunkte der aufgenommenen Einzelstreifenmuster,
    - Ermitteln der größtmöglichen Projektionsfläche anhand der aufgenommenen Einzelstreifenmuster,
    - Vergleichen der Lage der Linienschnittpunkte innerhalb der aufgenommenen Einzelstreifenmuster mit der bekannten Lage der Linienschnittpunkte der von den Projektoren zu projizierenden Einzelstreifenmuster zur Ermittlung von Korrekturdaten zur Korrektur von infolge von Unebenheiten der Projektionsfläche auftretenden Verzerrungen,
    - Berechnen von Warp-Feldern und Imagewarping entsprechend der Korrekturdaten.

2.  Verfahren zur automatischen Kalibrierung eines Multiprojektorsystems nach Anspruch 1, **dadurch gekennzeichnet, dass** sich zwecks Erhöhung der Gesamtleuchtstärke der Projektion die von den einzelnen Projektoren erzeugten Projektionsflächen möglichst vollständig überlappen, wobei die größtmögliche gemeinsame Projektionsfläche innerhalb des Überlappungsbereichs der Projektionsfläche sämtlicher Projektoren als insbesondere Rechteckfläche ermittelt wird.

3.  Verfahren zur automatischen Kalibrierung eines Multiprojektorsystems nach Anspruch 1, **dadurch gekennzeichnet, dass** sich die von den einzelnen Projektoren erzeugten Projektionsflächen teilweise überlappen, wobei die größtmögliche Projektionsfläche innerhalb der von den einzelnen Projektionsflächen sämtlicher Projektoren angeordnet ist und diese sowie den Überlappungsbereich umfasst und insbesondere als Rechteckfläche ermittelt wird.

4.  System zur automatischen Kalibrierung eines Multiprojektorsystems nach Anspruch 3, **dadurch gekennzeichnet, dass** die Lichtstärke der Projektoren innerhalb ihrer Überlappungsbereiche reduziert wird und somit an die Lichtstärke der Projektoren innerhalb der diesen jeweils zugeordneten nicht überlappenden Projektionsflächenbereichen angepasst wird.

**Fig.1**

**Fig.2**

**Fig.3**

**Fig.4**

Fig.5

Fig.6

**Fig.7**

OP-Simulation im FIRST-internen
5-Seiten X-Rooms(TM)

**Fig.8**

Fig.9

Fig.10

**Fig.11**

**Fig.12**

**Fig.13**

**Fig.14**

**Fig.15**

**Fig.16**

verzerrte Teilprojektion

Blendbild

vorgewarptes Teilbild

vorgewarptes und geblendetes Teilbild

entzerrte Teilprojektion

entzerrte und geblendete Teilprojektion

Fig.17

**Europäisches Patentamt**

**EUROPÄISCHER RECHERCHENBERICHT**

Nummer der Anmeldung

EP 03 02 4758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 222 593 B1 (JING GANGLU ET AL) 24. April 2001 (2001-04-24) <br> * Spalte 5, Zeile 66 - Spalte 6, Zeile 16; Abbildung 3 * <br> * Spalte 7, Zeile 47 - Spalte 8, Zeile 4; Abbildung 7 * <br> * Spalte 10, Zeile 63 - Spalte 11, Zeile 31; Abbildung 15 * <br> ----- | 1-4 | H04N5/74 |

**RECHERCHIERTE SACHGEBIETE (Int.Cl.7)**

H04N

Der vorliegende Recherchenbericht wurde für alle Patentansprüche erstellt

| Recherchenort | Abschlußdatum der Recherche | Prüfer |
|---|---|---|
| DEN HAAG | 27. April 2004 | Wahba, A |

EPO FORM 1503 03.82 (P04C03)

**EP 1 434 434 A1**

## ANHANG ZUM EUROPÄISCHEN RECHERCHENBERICHT
## ÜBER DIE EUROPÄISCHE PATENTANMELDUNG NR.

EP 03 02 4758

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2004

| Im Recherchenbericht angeführtes Patentdokument | Datum der Veröffentlichung | Mitglied(er) der Patentfamilie | Datum der Veröffentlichung |
|---|---|---|---|
| US 6222593 B1 | 24-04-2001 | JP 9326981 A<br>US 6538705 B1 | 16-12-1997<br>25-03-2003 |